# EUROPEAN PATENT SPECIFICATION

(11) **EP 2 044 749 B1**
(45) Date of publication and mention of the grant of the patent: **07.09.2011**
(21) Application number: 07787326.3
(22) Date of filing: 10.07.2007
(51) Int. Cl.: H04L 29/06

(54) **DISPATCHING REQUEST FRAGMENTS FROM A RESPONSE AGGREGATING SURROGATE**
VERSCHICKEN DER ANTRAGSFRAGMENTE VON EINEM ANTWORTAGGREGATIONSSURROGAT
ENVOI DE FRAGMENTS DE DEMANDE PROVENANT D'UN SUBSTITUT D'AGREGATION DE REPONSE

(30) Priority: 17.07.2006 US 457937
(43) Date of publication of application: 08.04.2009
(73) Proprietor: International Business Machines Corporation, Armonk, NY 10504 (US)
(72) Inventor: CHETUPARAMBIL, Madhu, Raleigh, North Carolina 27614 (US); HESMER, Stephan, D-71116 Gaertringen (DE); KAPLINGER, Todd, Eric, Raleigh, North Carolina 27617 (US); MEDURI, Subbarao, Apex, North Carolina 27539 (US); MOLDENHAUER, Maxim, Avery, Durham, North Carolina 27713 (US)
(74) Representative: Pyecroft, Justine Nicola C.
(86) International application number: PCT/EP2007/057051
(87) International publication number: WO 2008/009591

(56) References cited:
- WO-A-01/82550
- US-A1- 2004 162 886
- US-B1- 6 480 887

## Description

### BACKGROUND OF THE INVENTION

### Field of the Invention

The present invention relates to the field of content assembly for Web applications and more particularly to edgified content distribution for Web applications.

### Description of the Related Art

Content assembly for Web applications refers to the creation, arrangement and distribution of markup language specified content over a computer communications network. Commonly embodied in the form of a page viewable in a Web browser, markup language content generally includes markup language formatted text, imagery, audiovisual elements and the like, and can be distributed on demand to requesting content browsers. Upon receipt, content browsers can render the markup language specified content for viewing and interaction by end users.

In the most general circumstance, a content server can serve markup to requesting content browsers on demand. For content experiencing higher demand, however, multiple content servers can be arranged in a server cluster in order to balance the load to provide substantial responsiveness for content requesting end users. In the latter circumstance, the server cluster remains centralized. As a result, for geographically dispersed end users, substantial latencies can occur as content is assembled for delivery to end users from afar.

Edgified content distribution refers to a technology family intended to address the problem of geographically dispersed content consumers. In an edgified content distribution network, content is pushed to the edge of the network to be delivered on demand by content consumers closest to the edge of the network. Edgified technologies have proven highly effective and form an integral portion of the content distribution strategy for most content distributors distributing content on a wide scale.

Content that does not change over a long period of time is referred to as static content. Static content can be easily cached for quick delivery to end users via an edgified content delivery network. In contrast, content based upon dynamic, frequently-updated content and personalized or customized content cannot be readily cached due to the changing nature of the content. Dynamic content often is created in a data center within an origin server, in conjunction with a database containing server pages, and an application server configured to combine the foregoing elements in real time to produce the dynamically changing page.

Producing a dynamic page entails substantial processing at the origin server, which must format and deliver the data to the browser. The process of producing a dynamic page can be especially resource consumptive when repeated for every content request, since the processing overhead expended to regenerate an entire page can be very high. A bottleneck can occur as the origin server becomes overwhelmed, resulting in slow downloads or crashes, and ever-growing numbers of servers and load balancers must be deployed to right the balance.

Edge Side Includes (ESI) technology is a specification accepted by the World Wide Web Consortium (W3C) that describes a means to push dynamic content from the origin server to multiple edge servers, closer to the end user. Offloading the burden of content assembly from the origin server to surrogate servers at the edge of the network increases content download speed and limits crashes because the origin server need not redesign pages each time a page element is updated - a process that doesn't scale to handle large numbers of simultaneous users.

ESI has proven effective in assembly pages from content fragments generally where the interrelationship between fragments matters little in the assembly of a page. Notwithstanding, more complex pages include interdependent fragments. By interdependent, it is meant that the rendering of one fragment may depend upon the prior resolution of another fragment. In this circumstance, the rendering of a complete page can be hindered by the need to sequentially resolve dependencies. Thus, the sequential nature of fragment assembly can result in the loss of any advantage achieved in the use of ESI at the edge of the network.

US 2004/0162886 discloses methods, systems, computer program products, and methods of doing business by caching dynamic content fragments in a distributed cache and assembling requested content using these fragments. An application developer specifies dependencies among content creating components and if one of these components is called upon to generate a content fragment dynamically, correlator data is programmatically created and attached to a message that references the component.

WO 01/82550 discloses a scalable networking protocol that allows multiple nodes to communicate via a multi-channel network medium.

### BRIEF SUMMARY OF THE INVENTION

According to a first aspect, there is provided an edgified content distribution data processing system comprising: an origin server configured to server markup specified pages formed from dynamically arranged fragments; a surrogate server communicatively linked to the origin server over a computer communications network and acting as a surrogate at an edge of the network on behalf of the origin server; and a dependency engine coupled to the surrogate server, the dependency engine comprising program code enabled to group the fragments according to interdependencies among the fragments and to load fragment groups in sequence to satisfy the interdependencies, wherein the program code is further enabled to load fragments within a group in parallel.

According to a preferred embodiment, the program code of the dependency engine is further enabled to determine the interdependencies from dependency data provided by the origin server.

According to another aspect, there is provided a dynamic page assembly method comprising identifying a selection of fragments for assembly into a dynamic page on behalf of an origin server; grouping the fragments into fragment groups based upon dependency relationships between selected ones of the fragments; aggregating the fragment groups into the dynamic page in a sequence defined to satisfy the dependency relationships, wherein fragments in a group are loaded in parallel and, serving the page to a content requesting client on behalf of the origin server.

According to a preferred embodiment, dependency data is received from the origin server that defines the dependency relationships for the selection of fragments.

Grouping the fragments into fragment groups based upon dependency relationships between selected ones of the fragments preferably includes grouping the fragments in the selection of fragments into fragment groups so as to identify those among the selection of fragments whose presence in the dynamic page are depended upon by others of the selection of fragments. Preferably, aggregating the fragment groups into the dynamic page in a sequence defined to satisfy the dependency relationships includes retrieving and aggregating each fragment in a fragment group in parallel.

According to another aspect, there is provided a computer program product comprising a computer usable medium embodying computer usable program code for dynamic page assembly, the computer program product including: computer usable program code for identifying a selection of fragments for assembly into a dynamic page on behalf of an origin server; computer usable program code for grouping the fragments into fragment groups based upon dependency relationships between selected ones of the fragments;computer usable program code for aggregating the fragment groups into the dynamic page in a sequence defined to satisfy the dependency relationships, wherein the program code is operable to load fragments within a group in parallel and, computer usable program code for serving the page to a content requesting client on behalf of the origin server.

### BRIEF DESCRIPTION OF THE SEVERAL VIEWS OF THE DRAWINGS

A preferred embodiment of the present invention will now be described, by way of example only, and with reference to the following drawings:
Figure 1 is a schematic illustration of an edgified content distribution data processing system configured for dispatching request fragments from a response aggregating surrogate in accordance with a preferred embodiment of the present invention; and,
Figure 2 is a flow chart illustrating a process for dispatching request fragments from a response aggregating surrogate in accordance with a preferred embodiment of the present invention.

### DETAILED DESCRIPTION OF THE INVENTION

Embodiments of the present invention provide a method, system and computer program product for dispatching request fragments from a response aggregating surrogate. In accordance with an embodiment of the present invention, dependency information for fragments in a dynamically assembled page can be determined and provided to a surrogate server in the edgified network. A dependency engine coupled to the surrogate server can use the dependency information to order the loading of each of the fragments, in parallel groups where appropriate in order both to assure the presence of dependencies for dependant fragments and also to enhance performance through parallel fragment loads where possible.

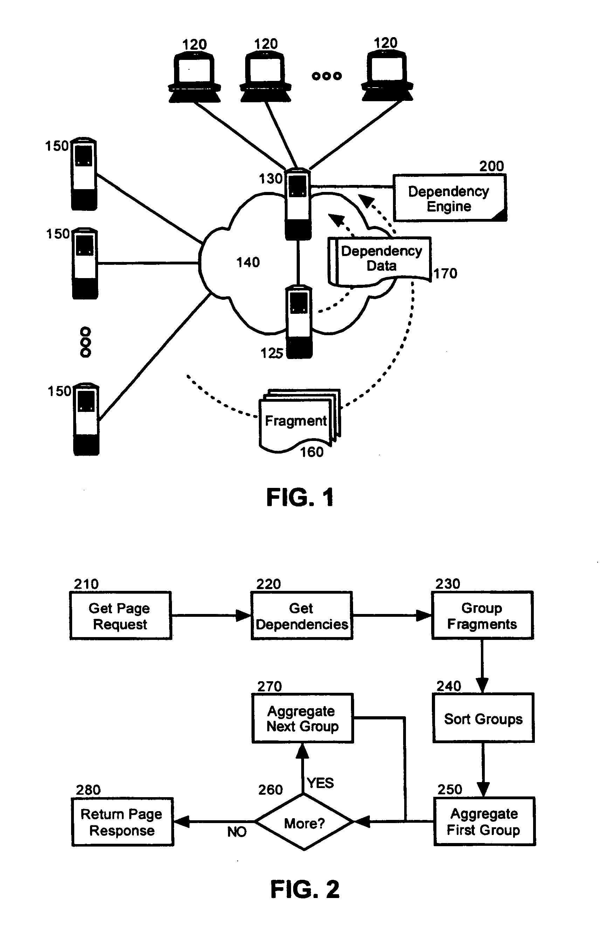

In further illustration, Figure 1 is a schematic illustration of an edgified content distribution data processing system configured for dispatching request fragments from a response aggregating surrogate in accordance with a preferred embodiment of the present invention. The system can include an origin server 125 configured to serve requested content to one or more content requesting clients 120 over a computer communications network 140. In order to enhance the speed in which content can be delivered to the content requesting clients 120, the origin server 125 can be coupled to a surrogate server 130 at the edge of the computer communications network 140. The surrogate server 130 can be configured to serve requested content to the content requesting clients 120 on behalf of the origin server 120.

Notably, the surrogate server 130 can be configured to assemble dynamic pages for delivery to the content requesting clients 120 in response to content requests from the content requesting clients 120. The dynamic pages can include a set of fragments 160 provided by one or more fragment sources 150 also communicatively coupled to the surrogate server 130 over the computer communications network 140. Each of the fragments 160 can be arranged to form the dynamic page. At least one of the fragments 160, however, can depend on the presence of at least one other of the fragments 160.

In this regard, a dependency hierarchy can be defined by the fragments 160 in accordance with the interdependent relationships among the fragments 160. To facilitate the loading of dependent ones of the fragments in proper order, without resorting to a sequential loading of the fragments 160, dependency data 170 provided by the origin server 125 can be processed in a dependency engine 200. The dependency engine can include program code enabled to group different ones of the fragments 160 for loading in sequence so as to satisfy the dependencies of the fragments 160 while achieving some parallel loading of others of the fragments 160.

In more particular illustration, Figure 2 is a flow chart illustrating a process for dispatching request fragments from a response aggregating surrogate in accordance with a preferred embodiment of the present invention. Beginning in block 210, a page request can be received for a dynamically constructed page defined by multiple different fragments. In block 220, the dependencies of the different fragments in the dynamically constructed page can be determined and in block 230, the different fragments can be grouped in order of dependant relationships. For example, in a page of four fragments labeled A, B, C and D, if B depends upon the presence of C and D, then C and D can be grouped together for loading in parallel, followed by A and B which also can be loaded in parallel after C and D.

In block 240, the groups can be sorted in proper sequence to ensure that those fragments that are depended upon by other fragments are loaded prior to the other fragments. Thereafter, in block 250, the first group to be loaded can be retrieved and aggregated. In decision block 260, if additional groups remain to be loaded, in block 270 the next group to be loaded can be retrieved and aggregated. This process can continue for all fragment groups. When no additional fragment groups remain to be aggregated, in block 280 the dynamically aggregated page can be returned to the content requestor for rendering. In this way, the dependency requirements of the fragments can be fulfilled during aggregation while allowing for some efficiencies in parallel loading portions of the fragments.

Embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, and the like. Furthermore, the invention can take the form of a computer program product accessible from a computer-usable or computer-readable medium providing program code for use by or in connection with a computer or any instruction execution system.

For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

## Claims

1. An edgified content distribution data processing system comprising:
an origin server (125) configured to server markup specified pages formed from dynamically arranged fragments (160);
a surrogate server (130) communicatively linked to the origin server (125) over a computer communications network and acting as a surrogate at an edge of the network on behalf of the origin server (125); and,
a dependency engine (200) coupled to the surrogate server (130), **characterized by** the dependency engine (200) comprising program code enabled to group the fragments (160) according to interdependencies among the fragments (160) and to load fragment groups in sequence to satisfy the interdependencies, wherein the program code is further enabled to load fragments (160) within a fragment group in parallel.

2. The data processing system of claim 1, wherein the program code of the dependency engine (200) is further enabled to determine the interdependencies from dependency data provided by the origin server (125).

3. The data processing system of claim 1 or 2, wherein the program code enabled to load fragment groups in sequence to satisfy the interdependencies comprises means for retrieving and loading each fragment (160) in a fragment group in parallel.

4. A dynamic page assembly method comprising:
identifying a selection of fragments (160) for assembly into a dynamic page on behalf of an origin server (125);
grouping the fragments (160) into fragment groups based upon dependency relationships between selected ones of the fragments (160);
aggregating the fragment groups into the dynamic page in a sequence defined to satisfy the dependency relationships, wherein fragments (160) in a fragment group are loaded in parallel; and
serving the page to a content requesting client on behalf of the origin server (125).

5. The method of claim 4, further comprising receiving dependency data from the origin server (125) that defines the dependency relationships for the selection of fragments (160).

6. The method of claim 4 or 5, wherein grouping the fragments (160) into fragment groups based upon dependency relationships between selected ones of the fragments (160), comprises grouping the fragments (160) in the selection of fragments (160) into fragment groups so as to identify those among the selection of fragments (160) whose presence in the dynamic page are depended upon by others of the selection of fragments (160).

7. The method of claim 4, 5 or 6, wherein aggregating the fragment groups into the dynamic page in a sequence defined to satisfy the dependency relationships, comprises retrieving and aggregating each fragment (160) in a fragment group in parallel.

8. A computer program product comprising a computer usable medium embodying computer usable program code for dynamic page assembly, the computer program product including: (16)
computer usable program code for identifying a selection of fragments (160) for assembly into a dynamic page on behalf of an origin server (125);
computer usable program code for grouping the fragments (160) into fragment groups based upon dependency relationships between selected ones of the fragments (160);
computer usable program code for aggregating the fragment groups into the dynamic page in a sequence defined to satisfy the dependency relationships, wherein the program code is operable to load fragments (160) within a fragment group in parallel; and
computer usable program code for serving the page to a content requesting client on behalf of the origin server (125).

9. The computer program product of claim 8, further comprising computer usable program code for receiving dependency data from the origin server (125) that defines the dependency relationships for the selection of fragments (160).

10. The computer program product of claim 8 or 9, wherein the computer usable program code for grouping the fragments (160) into fragment groups based upon dependency relationships between selected ones of the fragments (160), comprises computer usable program code for grouping the fragments (160) in the selection of fragments (160) into fragment groups so as to identity those among the selection of fragments (160) whose presence in the dynamic page are depended upon by others of the selection of fragments (160).

11. The computer program product of claim 8, 9 or 10, wherein the computer usable program code for aggregating the fragment groups into the dynamic page in a sequence defined to satisfy the dependency relationships, comprises computer usable program code for retrieving and aggregating each fragment (160) in a fragment group in parallel.

12. A computer program comprising program code means adapted to perform the method of any of claims 4 to 7 when said program is run on a computer.

## Patentansprüche

1. Datenverarbeitungssystem mit randnaher Verteilung von Inhalten, das Folgendes umfasst:
einen Ursprung-Server (125) geeignet zum serverseitigen Markieren bestimmter Seiten, gebildet aus dynamisch angeordneten Fragmenten (160);
einen Ersatz-Server (130), der zum Datenaustausch mit dem Ursprungs-Server (125) über ein Computer-Datenübertragungsnetzwerk verbunden ist und als Ersatz an einem Rand des Netzwerks im Auftrag des Ursprung-Servers (125) betrieben wird; und
eine Abhängigkeitseinrichtung (200), die mit dem Ersatz-Server (130) verbunden ist, **gekennzeichnet dadurch, dass** die Abhängigkeitseinrichtung (200) Programmcode umfasst,
der in der Lage ist, die Fragmente (160) gemäß zwischen den Fragmenten bestehenden Abhängigkeiten(160) zu gruppieren und die Fragmentgruppen der Reihe nach zu laden, um die gegenseitigen Abhängigkeiten zu berücksichtigen, wobei der Programmcode ferner das parallele Laden der Fragmente (160) innerhalb einer Fragmentgruppe erlaubt.

2. Datenverarbeitungssystem nach Anspruch 1, wobei der Programmcode der Abhängigkeitseinheit (200) ferner in der Lage ist, die gegenseitigen Abhängigkeiten aus Abhängigkeitsdaten zu ermitteln, die durch den Ursprung-Server bereitgestellt werden.

3. Datenverarbeitungssystem nach Anspruch 1 oder 2, wobei der Programmcode, der in der Lage ist, die Fragmentgruppen der Reihe nach zu laden, um die Abhängigkeiten zu berücksichtigen, ein Mittel zum parallelen Abrufen und Laden jedes Fragments (160) in einer Fragmentgruppe umfasst.

4. Dynamisches Seitenaufbauverfahren, das Folgendes umfasst:
Kennzeichnen einer Auswahl von Fragmenten (160) zum Zusammensetzen in einer dynamischen Seite im Auftrag eines Ursprung-Servers (125);
Anordnen der Fragmente (160) in Fragmentgruppen auf der Grundlage von Abhängigkeitsbeziehungen zwischen ausgewählten der Fragmente (160);
Zusammenführen der Fragmentgruppen in die dynamische Seite in einer Reihenfolge, die zum Berücksichtigen der Abhängigkeitsbeziehungen vorgegeben ist, wobei die Fragmente (160) in einer Fragmentgruppe parallel geladen werden; und Übergeben der Seite an einen Inhalte anfordernden Client im Auftrag des Ursprung-Servers (125).

5. Verfahren nach Anspruch 4, das ferner das Empfangen von Abhängigkeitsdaten von dem Ursprung-Server (125) umfasst, die die Abhängigkeitsbeziehungen für die Auswahl der Fragmente (160) festlegt.

6. Verfahren nach Anspruch 4 oder 5, wobei das Anordnen der Fragmente (160) in Fragmentgruppen, das auf Abhängigkeitsbeziehungen zwischen ausgewählten der Fragmente (160) beruht, das Gruppieren der Fragmente (160) in der Auswahl aus Fragmenten (160) in Fragmentgruppen umfasst, um unter der Auswahl von Fragmenten (160) die Fragmente zu kennzeichnen, deren Anwesenheit in der dynamischen Seite von anderen in der Auswahl von Fragmenten (160) abhängt.

7. Verfahren nach Anspruch 4, 5 oder 6, wobei das Zusammenführen der Fragmentgruppen in die dynamische Seite in einer Reihenfolge, die zum Berücksichtigen der Abhängigkeitsbeziehungen festgelegt ist, das parallele Abrufen und Zusammenführen jedes Fragments (160) in einer Fragmentgruppe umfasst.

8. Computerprogrammprodukt, das ein computerverwendbares Medium umfasst, welches einen computerverwendbaren Programmcode zum dynamischen Seitenaufbau umfasst, wobei das Computerprogrammprodukt Folgendes beinhaltet:
computerverwendbaren Programmcode zum Kennzeichnen einer Auswahl von Fragmenten (160) für das Zusammensetzen in einer dynamischen Seite im Auftrag eines Ursprung-Servers (125);
computerverwendbaren Programmcode zum Anordnen der Fragmente (160) in Fragmentgruppen auf der Grundlage von Abhängigkeitsbeziehungen zwischen ausgewählten Fragmenten (160);
computerverwendbaren Programmcode zum Zusammenführen der Fragmentgruppen in die dynamische Seite in einer Reihenfolge, die zum Berücksichtigen der
Abhängigkeitsbeziehungen festgelegt ist, wobei der Programmcode zum parallelen Laden von Fragmenten (160) innerhalb einer Fragmentgruppe geeignet ist; und
computerverwendbaren Programmcode zum Übergeben der Seite an einen Inhalte anfordernden Client im Auftrag des Ursprung-Servers (125).

9. Computerprogrammprodukt nach Anspruch 8, das ferner computerverwendbaren Programmcode zum Empfangen von Abhängigkeitsdaten von dem Ursprungs-Server (125) umfasst, der die Abhängigkeitsdaten für die Auswahl von Fragmenten (160) festlegt.

10. Computerprogrammprodukt nach Anspruch 8 oder 9, wobei der computerverwendbare Programmcode für das Anordnen der Fragmente (160) in Fragmentgruppen auf der Grundlage von Abhängigkeitsbeziehungen zwischen ausgewählten der Fragmente (160) einen computerverwendbaren Programmcode zum Anordnen der Fragmente (160) in der Auswahl von Fragmenten (160) in Fragmentgruppen umfasst, um die Fragmente unter der Auswahl an Fragmenten (160) zu kennzeichnen, deren Anwesenheit in der dynamischen Seite von anderen in der Auswahl von Fragmenten (160) abhängt.

11. Computerprogrammprodukt nach Anspruch 8, 9 oder 10, wobei der computerverwendbare Programmcode zum Zusammenführen der Fragmentgruppen in der dynamischen Seite in einer Reihenfolge, die zum Berücksichtigen der Abhängigkeitsbeziehungen festgelegt ist, computerverwendbaren Programmcode zum parallelen Abrufen und Zusammenführen jedes Fragments (160) in einer Fragmentgruppe umfasst.

12. Computerprogramm, das zum Ausführen des Verfahrens nach irgendeinem der Ansprüche 4 bis 7 geeignete Programmcodemittel umfasst, wenn das Programm auf einem Rechner ausgeführt wird.

## Revendications

1. Système de traitement de données pour distribution de contenus à bord comprenant :
un serveur d'origine (125) configuré pour des pages spécifiées de balisage par serveur formées à partir de fragments agencés de façon dynamique (160) ;
un serveur de substitution (130) lié par communication au serveur d'origine (125) sur un réseau de communications d'ordinateur et agissant comme un substitut au niveau d'un bord du réseau au nom du serveur d'origine (125) ; et,
un moteur de dépendance (200) couplé au serveur de substitution (130), **caractérisé par** le moteur de dépendance (200) qui comprend un code de programme activé pour regrouper les fragments (160) conformément aux interdépendances parmi les fragments (160) et pour charger les groupes de fragments à la suite afin de satisfaire aux interdépendances, dans lequel le code de programme est en outre activé pour charger les fragments (160) dans un groupe de fragments en parallèle.

2. Système de traitement de données selon la revendication 1, dans lequel le code de programme du moteur de dépendance (200) est en outre activé pour déterminer les interdépendances vis-à-vis des données de dépendance fournies par le serveur d'origine (125).

3. Système de traitement de données selon la revendication 1 ou 2, dans lequel le code de programme activé pour charger les groupes de fragments à la suite afin de satisfaire aux interdépendances comprend un moyen pour récupérer et charger chaque fragment (160) dans un groupe de fragments en parallèle.

4. Procédé d'assemblage de page dynamique comprenant :
l'identification d'une sélection de fragments (160) pour un assemblage en une page dynamique au nom d'un serveur d'origine (125) ;
le regroupement des fragments (160) en groupes de fragments sur la base des relations de dépendance entre des fragments sélectionnés parmi les fragments (160) ;
l'agrégation des groupes de fragments dans la page dynamique dans une séquence définie pour satisfaire aux relations de dépendance, où les fragments (160) dans un groupe de fragments sont chargés en parallèle ; et
la desserte de la page à un client demandant un contenu au nom du serveur d'origine (125).

5. Procédé selon la revendication 4, comprenant en outre la réception de données de dépendance à partir du serveur d'origine (125) qui définit les relations de dépendance pour la sélection de fragments (160).

6. Procédé selon la revendication 4 ou 5, dans lequel le regroupement des fragments (160) en groupes de fragments sur la base des relations de dépendance entre les fragments sélectionnés parmi les fragments (160), comprend le regroupement des fragments (160) dans la sélection de fragments (160) en groupes de fragments de façon à identifier ceux parmi la sélection de fragments (160) dont la présence dans la page dynamique dépend d'autres de la sélection de fragments (160).

7. Procédé selon la revendication 4, 5 ou 6, dans lequel l'agrégation des groupes de fragments dans la page dynamique dans une séquence définie pour satisfaire aux relations de dépendance, comprend la récupération et l'agrégation de chaque fragment (160) dans un groupe de fragments en parallèle.

8. Produit de programme informatique comprenant un support pouvant être utilisé par un ordinateur mettant en oeuvre un code de programme pouvant être utilisé par un ordinateur pour un assemblage de page dynamique, le produit de programme informatique comprenant :
un code de programme pouvant être utilisé par un ordinateur destiné à identifier une sélection de fragments (160) pour un assemblage en une page dynamique au nom d'un serveur d'origine (125) ;
un code de programme pouvant être utilisé par un ordinateur destiné à regrouper les fragments (160) en groupes de fragments sur la base des relations de dépendance entre les fragments sélectionnés parmi les fragments (160) ;
un code de programme pouvant être utilisé par un ordinateur destiné à réaliser une agrégation des groupes de fragments dans la page dynamique dans une séquence définie pour satisfaire aux relations de dépendance, où le code de programme peut être mis en oeuvre pour charger les fragments (160) dans un groupe de fragments en parallèle ; et
un code de programme pouvant être utilisé par un ordinateur destiné à desservir la page à un client demandant un contenu au nom du serveur d'origine (125).

9. Produit de programme informatique selon la revendication 8, comprenant en outre un code de programme pouvant être utilisé par un ordinateur destiné à recevoir des données de dépendance du serveur d'origine (125) qui définit les relations de dépendance pour la sélection de fragments (160).

10. Produit de programme informatique selon la revendication 8 ou 9, dans lequel le code de programme pouvant être utilisé par un ordinateur destiné à regrouper les fragments (160) en groupes de fragments sur la base des relations de dépendance entre les fragments sélectionnés parmi les fragments (160), comprend un code de programme pouvant être utilisé par un ordinateur destiné à regrouper les fragments (160) dans la sélection de fragments (160) en groupes de fragments de façon à identifier ceux parmi la sélection de fragments (160) dont la présence dans la page dynamique dépend d'autres de la sélection de fragments (160).

11. Produit de programme informatique selon la revendication 8, 9 ou 10, dans lequel le code de programme pouvant être utilisé par un ordinateur destiné à réaliser une agrégation des groupes de fragments dans la page dynamique dans une séquence définie pour satisfaire aux relations de dépendance, comprend un code de programme pouvant être utilisé par un ordinateur destiné à récupérer et à réaliser une agrégation de chaque fragment (160) dans un groupe de fragments en parallèle.

12. Programme informatique comprenant un moyen de code de programme conçu pour réaliser le procédé selon l'une quelconque des revendications 4 à 7 lorsque ledit programme est exécuté sur un ordinateur.
